# EUROPÄISCHE PATENTSCHRIFT

(11) **EP 3 150 865 B1**
(45) Veröffentlichungstag und Bekanntmachung des Hinweises auf die Patenterteilung: **13.09.2017**
(21) Anmeldenummer: 15187983.0
(22) Anmeldetag: 01.10.2015
(51) Int. Cl.: F16B 13/08, F16B 31/02, F16B 41/00

(54) **EINSCHLAGANKER**
BOLT ANCHORED BY IMPACT
CHEVILLE A FRAPPER

(43) Veröffentlichungstag der Anmeldung: 05.04.2017
(73) Patentinhaber: Volborth, Thomas, 58553 Halver (DE)
(72) Erfinder: Volborth, Thomas, 58553 Halver (DE)
(74) Vertreter: Patentanwälte Dörner & Kötter PartG mbB

(56) Entgegenhaltungen:
- DE-A1- 19 831 372
- DE-A1-102007 027 218
- DE-A1-102009 047 396
- DE-U1-202010 012 254
- US-A- 2 850 937
- US-A- 4 483 648

## Beschreibung

Die Erfindung betrifft einen Einschlaganker, mit einem Schaft und einem endseitig angeordneten, nach außen sich erweiternden Spreizkonus nach dem Oberbegriff des Patentanspruchs 1.

Derartige Einschlaganker, auch als Nagelanker bezeichnet, funktionieren nach dem Prinzip eines Bolzenankers, wobei jedoch ein Anzugsdrehmoment zum Verspreizen des Ankers entfällt. Die Funktionsweise derartiger Bolzenanker, die auch als Schlagspreizdübel bekannt sind, ist beispielsweise in der DE 40 15 982 A1 beschrieben. Durch das Einschlagen des Einschlagankers in das Bohrloch eines harten Vollbaustoffs wird die Spreizhülse auf den Spreizkonus getrieben, wodurch die Verankerung in dem Bohrloch erzielt wird. Bei nachfolgender Belastung des Einschlagankers spreizt dieser selbstständig nach, wobei der Spreizkonus weiter in die Spreizhülse hineingezogen wird und diesen gegen die Bohrlochwand verspannt. Derartige Einschlaganker werden beispielsweise von der Firma Fischer-Werke Artur Fischer GmbH & Co. KG unter der Bezeichnung Nagelanker FNA II vertrieben.

Beim Einschlagen eines Einschlagankers in ein Bohrloch besteht regelmäßig die Problematik, dass durch das Schieben der Spreizhülse auf den Spreizkonus eine Verschiebung des Ankers um bis zu 2 Millimeter entstehen kann, was ein Lockern der montierten Bauelemente zur Folge haben kann. Für eine nachhaltige Verbindungsicherheit ist daher ein korrektes Einschlagen des Einschlagankers zwingend erforderlich. Nachteilig hierbei ist, dass im Nachhinein nicht mehr erkennbar ist, ob ein Einschlaganker zum Befestigungszeitpunkt ordnungsgemäß eingeschlagen wurde. Ein gattungsgemäßer Einschlaganker ist in der US 2,850,937 beschrieben.

Hier will die Erfindung Abhilfe schaffen. Der Erfindung liegt die Aufgabe zu Grunde, einen Einschlaganker der vorgenannten Art bereitzustellen, der nach einer erfolgten Verankerung in einem Bohrloch eine optische Kontrolle des erfolgten ordnungsgemäßen Einschlagvorgangs ermöglicht. Gemäß der Erfindung wird diese Aufgabe durch einen Einschlaganker mit den Merkmalen des kennzeichnenden Teils des Patentanspruchs 1 gelöst.

Mit der Erfindung ist ein Einschlaganker der vorgenannten Art bereitgestellt, der nach einer erfolgten Verankerung in einem Bohrloch eine optische Kontrolle der Ankerverbindung in Bezug auf ein ordnungsgemäß erfolgtes Einschlagen des Einschlagankers in das Bohrloch ermöglicht. Durch den durch mechanische Vorspannung erzielten metastabilen Zustand des Anzeigeelements ist bewirkt, dass dieses bei Anliegen einer definierten auf die Unterlegscheibe einwirkenden Verspannung eine signifikante, sprunghafte, mit bloßem Auge wahrnehmbare Verformung erfährt. Diese Art der Ausbildung beinhaltet den Vorteil, dass erst bei Erreichen der vorgegebenen, erforderlichen Anlagekraft, mit der die Unterlegscheibe an den Rand des Bohrlochs gepresst wird, eine Verformung des Anzeigeelements erfolgt. Auf diese Weise ist verhindert, dass bei einer lediglich annähernd ausreichenden Vorspannkraft, welche jedoch nicht dem konstruktionsseitig vorgegebenen Wert entspricht, keine Veränderung des Anzeigeelements auftritt. Es ist damit gewährleistet, dass der erfindungsgemäße Einschlaganker erst beim Erreichen der vorgeschriebenen Vorspannkraft des Nagelkopfes eine Rückmeldung erteilt. Darüber hinaus ist das Auslösen des Übergangs vom metastabilen Zustand in den stabilen Zustand mit einem akustischen Geräusch verbunden, wodurch zusätzlich eine Wahrnehmung des Erreichens der definierten Vorspannkraft gegeben ist.

Erfindungswesentlich ist das Vorsehen einer Vorspannung in der Unterlegscheibe, wodurch ein "Kraftreservoir" gebildet ist, dass bei Erreichen der erforderlichen Vorspannkraft eine sprunghafte Verformung der Unterlegscheibe bzw. eines Bereichs der Unterlegscheibe ermöglicht (Übergang vom metastabilen in einen stabilen Zustand).

Das Anzeigeelement ist durch einen radialen Abschnitt der Unterlegscheibe gebildet. Hierdurch ist eine gute optische Erfassung der sprunghaften Verformung erzielt.

Weiterhin ist ein äußerer radialer Abschnitt gegenüber einem inneren radialen Abschnitt vorgespannt, der sich trichterförmig mit einer größeren Steigung axial aus dem äußeren radialen Abschnitt heraus erstreckt. Dabei ist vorteilhaft zwischen dem äußeren radialen Abschnitt und dem inneren radialen Abschnitt ein wellenförmiger Zwischenabschnitt angeordnet, der einen Querschnitt in Form eines "liegenden S" aufweist und der zunächst entgegen der Steigung des inneren Ringabschnitts verläuft und sodann über einen Wendepunkt in die Steigung des äußeren Ringabschnitts übergeht. Diese Geometrie hat sich besonders vorteilhaft in Bezug auf eine Einstellung der Auslösekraft für den Übergang vom metastabilen in den stabilen Zustand erwiesen. Dabei hat sich überraschend gezeigt, dass durch das sprunghafte Umklappen des äußeren radialen Abschnitts eine zusätzliche Verspannung erzielt ist, die auch bei einer Verschiebung des Ankers nach Aufschieben der Spreizhülse auf den Spreizkonus eine ausreichende Verspannung der Ankerverbindung gewährleistet ist. Dadurch sind gleichsam die im Stand der Technik als problematisch auftretenden Setzerscheinungen kompensiert.

In weiterer Ausgestaltung der Erfindung ist auf einer Seite der Unterlegscheibe wenigstens eine bogenförmige, bevorzugt ringförmige Furche eingebracht, die zwischen zwei radialen Abschnitten verläuft. Hierdurch ist die sprunghafte Verformung des das Anzeigeelements ausbildenden äußeren Abschnitts unterstützt.

In vorteilhafter Ausgestaltung der Erfindung weist die Unterlegscheibe eine Dicke von ≤ 0,8 mm, bevorzugt ≤ 0,7 mm auf. Es hat sich gezeigt, dass hierdurch eine zuverlässige Auslösung des Übergangs vom metastabilen in den stabilen Zustand gewährleistet ist. Dabei wurden insbesondere gute Ergebnisse bei der Herstellung der Unterlegscheibe aus einem Federstahl erzielt.

In weiterer Ausgestaltung der Erfindung ist der äußere Rand des äußeren radialen Abschnitts zumindest bereichsweise mit einem Farbreservoir versehen, das durch das sprunghaften Umschlagen dieses äußeren radialen Abschnitts zerstörbar ist. Hierdurch ist im Zeitpunkt des Erreichens der erforderlichen Vorspannkraft ein Austreten von Farbe erzielt, die sich ringförmig um die anliegende Unterlegscheibe ausbreitet, wodurch die optische Erfassung des gewünschten Zustands zusätzlich verstärkt ist.

In Weiterbildung der Erfindung ist an dem Schaft ein zumindest bereichsweise umlaufender Steg angeordnet, wobei die Unterlegscheibe zwischen diesem Steg und dem Nagelkopf angeordnet ist. Hierdurch ist die Unterlegscheibe unverlierbar an dem Einschlaganker gehalten. Bevorzugt ist der Steg durch einen in einer in dem Schaft vorhandenen Nut eingebrachten Haltering gebildet.

In weiterer Ausgestaltung der Erfindung weist der äußere radiale Abschnitt wenigstens die doppelte, bevorzugt wenigstens die vierfache, besonders bevorzugt wenigstens die fünffache Breite des inneren radialen Abschnitts auf. Hierdurch ist eine deutlich sichtbare, sprunghafte Verformung beim Übergang vom metastabilen Zustand in den stabilen Zustand bewirkt. Darüber hinaus ist eine optimale zusätzliche Verspannung der Ankerverbindung durch die Unterlegscheibe nach Erreichen des stabilen Zustands erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Einschlagankers im bereits verankerten Zustand (Mauerwerk mit Bohrloch nicht abgebildet);
- Figur 2: die schematische Darstellung der Unterlegscheibe des Einschlagankers aus Figur 1 (stabiler Zustand)
a) in räumlicher Darstellung;
b) in der Draufsicht;
c) im Schnitt A-A;

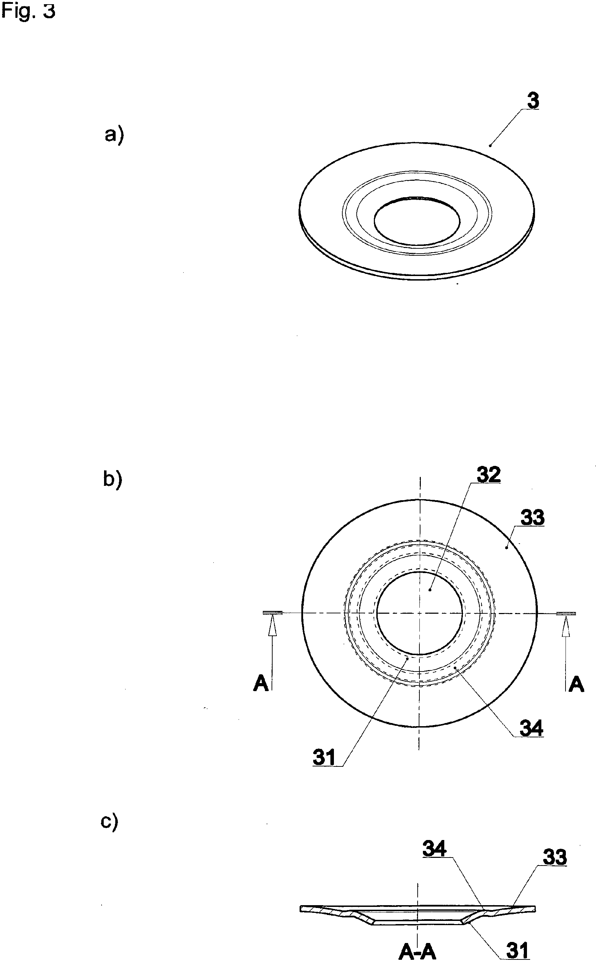

- Figur 3: die schematische Darstellung der Unterlegscheibe aus Figur 2 im unbelastetem Zustand (metastabiler Zustand)
a) in räumlicher Darstellung;
b) in der Draufsicht;
c) im Schnitt A-A;

Der als Ausführungsbeispiel gewählte Einschlaganker 1 umfasst einen Schaft 11 sowie einen endseitig angeordneten, nach außen sich erweiternden Spreizkonus 12. Es ist eine mit einem Längsschlitz 21 versehene Spreizhülse 2 angeordnet, die zur Verankerung des Einschlagankers 1 in einem Bohrloch eines - nicht dargestellten - Betonmauerwerks auf den Spreizkonus 12 auftreibbar ist. Dem Spreizkonus 12 gegenüberliegend ist an dem Schaft 11 ein Nagelkopf 13 angeformt. Auf die Hülse 11 ist weiterhin eine Unterlegscheibe 3 aufgeschoben, die an dem Nagelkopf 13 des Einschlagankers 1 anliegt. In einer in der Spreizhülse 2 unterhalb der Unterlegscheibe 3 vorgesehenen - nicht dargestellten - Nut ist im Ausführungsbeispiel ein - nicht dargestellter - Federring eingebracht, derart, dass die Unterlegscheibe 3 zwischen dem Nagelkopf 13 und dem - nicht dargestellten - Federring unverlierbar gehalten ist.

Die Unterlegscheibe 3 ist im Ausführungsbeispiel im Wesentlichen kreisringförmig ausgebildet, mit einem eine Durchführung 32 aufweisenden inneren Ringabschnitt 31 sowie einem äußeren Ringabschnitt 33. Der äußere Ringabschnitt 33 bildet ein Anzeigeelement zur optischen Kontrolle der Ankerverbindung des Einschlagankers 1 mit dem - nicht dargestellten - Betonmauerwerk aus.

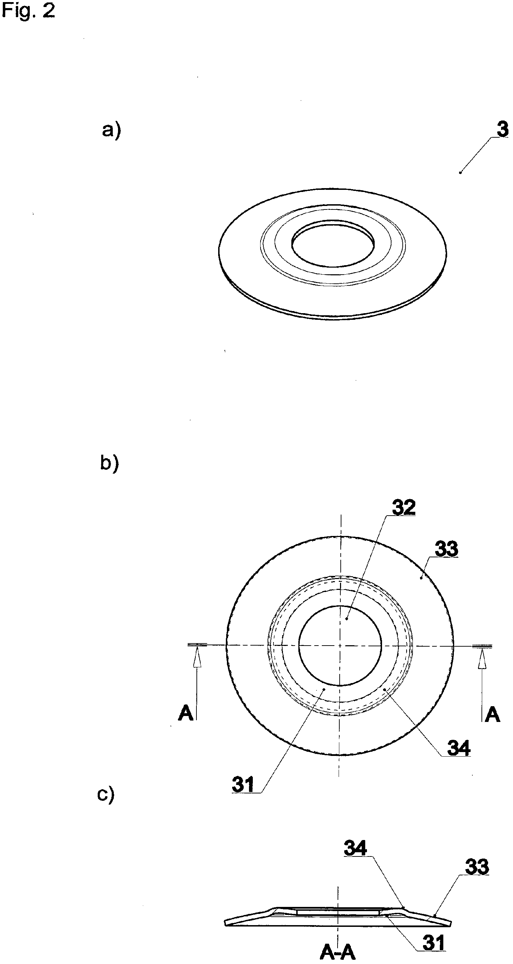

Die Unterlegscheibe 3 ist vorgespannt ausgeführt, wodurch sie in einem metastabilen Zustand verbracht ist. In diesem Zustand ist der innere Ringabschnitt 31 von innen nach außen sich nach oben hin erweiternd ausgebildet und geht in den äußeren Ringabschnitt 33 über, der eine nach außen hin ansteigende Ringfläche ausbildet (vgl. Figur 2). Zwischen dem inneren Ringabschnitt 31 und dem äußeren Ringabschnitt 33 ist ein wellenförmiger Zwischenabschnitt 34 angeordnet, der einen Querschnitt in Form eines "liegenden S" aufweist. Dieser Zwischenabschnitt 34 verläuft zunächst entgegen der Steigung des inneren Ringabschnitts 31 und geht sodann über einen Wendepunkt in die Steigung des äußeren Ringabschnitts 33 über. Im nicht verspannten Zustand der Ankerverbindung liegt der Nagelkopf 13 des Einschlagankers 1 auf dem wellenförmigen Zwischenabschnitt 34 der Unterlegscheibe 3 auf.

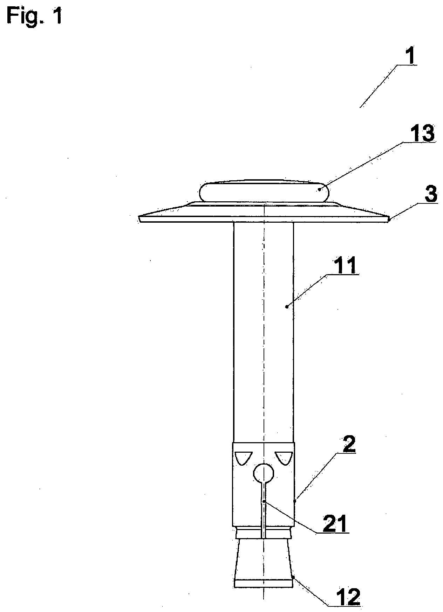

Beim Einschlagen des Einschlagankers in ein - nicht dargestelltes - Bohrloch einer Betonmauer wird der Zwischenabschnitt 34 in Richtung der - nicht dargestellten - Betonmauer gepresst, bis die Vorspannung der Unterlegscheibe 3 überwunden ist und diese "auslöst", wodurch sie sprunghaft in den stabilen Zustand überführt wird. Hierbei nimmt der äußere Ringabschnitt 73 einen sich kegelförmig in Richtung der - nicht dargestellten - Betonmauer erweiterten Zustand an, auf welchem Mauerwerk der äußere Ringabschnitts 33 das Bohrloch umgebend mit seinem äußeren Randbereich aufliegt. Der innere Ringabschnitt 31 liegt nun nicht länger auf dem Mauerwerk auf, sondern ist durch den äußeren Ringabschnitt 33 über den Zwischenabschnitt 34 gegen den Nagelkopf 13 des Einschlagankers 1 gedrückt (vgl. Figur 1). Hierdurch ist wiederum eine Vorspannung gebildet, welche eine Kompensation von Setzerscheinungen der Ankerverbindung bewirkt.

Der äußere Ringabschnitt 33 bildet ein zuverlässiges Anzeigeelement aus, da dieser nur nach Erreichen des stabilen Zustands auf dem Mauerwerk aufliegt. Hierdurch ist mit dem bloßen Auge erkennbar, ob ein ordnungsgemäßes Einschlagen des Einschlagankers erfolgt ist, d.h., ob die vorgesehene Vorspannkraft erreicht worden ist. Die so ausgebildete Unterlegscheibe 3 birgt zudem den Vorteil, dass nach sprunghaften Erreichen stabilen Zustands eine Vorspannung zur zusätzlichen Sicherung der Ankerverbindung gebildet ist. Dadurch, dass die Unterlegscheibe 3 die Auflagefläche von innen nach außen wechselt, ist zudem ein Eindringen der Unterlegscheibe 3 in die das Bohrloch umgebende Maueroberfläche verhindert.

Eine optische Unterstützung des durch den äußeren Ringabschnitt 33 gebildeten Anzeigeelements ist dadurch erzielbar, dass der äußere Rand des äußeren Ringabschnitts 33 zumindest bereichsweise mit einem Farbreservoir versehen ist, dass durch das sprunghafte Umschlagen des äußeren Ringabschnitts 33 zerstört wird, wodurch die Farbe umlaufend des äußeren Ringabschnitts 33 austritt. Ein solches Farbreservoir kann beispielsweise durch einen an dem Außenrand des äußeren Ringabschnitts 33 umlaufend angebrachten mit Farbe gefüllten Farbschlauch gebildet sein, der derart spröde ausgebildet und/oder derart dünne Wandung aufweist, dass er durch das Umklappen des äußeren Ringabschnitts 33 gegen das Mauerwerk zerstört wird.

## Patentansprüche

1. Einschlaganker, mit einem Schaft (11) und einem endseitig angeordneten, nach außen sich erweiternden Spreizkonus (12) sowie einer auf den Spreizkonus (12) auftreibbaren Spreizhülse (2) zur Verankerung des Einschlagankers (1) in harten Vollbaustoffen, insbesondere in Betonmauerwerken, sowie einem dem Spreizkonus (12) gegenüberliegend angeordneten, endseitig sich an den Schaft anschließenden Nagelkopf (13), wobei dem Nagelkopf (13) vorgelagert eine Unterlegscheibe (3) angeordnet ist, die im unbelasteten Zustand zumindest bereichsweise mechanisch vorgespannt ist, wodurch diese einen metastabilen Zustand aufweist, **dadurch gekennzeichnet, dass** ein Anzeigeelement zur optischen Kontrolle der Ankerverbindung durch einen radialen Abschnitt der Unterlegscheibe gebildet ist, wobei ein äußerer radialer Abschnitt (33) gegenüber einem inneren radialen Abschnitt (31) vorgespannt ist, der sich trichterförmig mit einer größeren Steigung axial aus dem äußeren radialen Abschnitt (33) heraus erstreckt.

2. Einschlaganker nach Anspruch 1, **dadurch gekennzeichnet, dass** zwischen dem äußeren radialen Abschnitt (33) und dem inneren radialen Abschnitt (31) ein wellenförmiger Zwischenabschnitt (34) angeordnet ist, der einen Querschnitt in Form eines "liegenden S" aufweist und der zunächst entgegen der Steigung des inneren Ringabschnitts (31) verläuft und sodann über einen Wendepunkt in die Steigung des äußeren Ringabschnitts (33) übergeht.

3. Einschlaganker nach einem der vorgenannten Ansprüche, **dadurch gekennzeichnet, dass** das auf einer Seite der Unterlegscheibe (3) wenigstens eine bogenförmige, bevorzugt ringförmige Furche eingebracht ist, die zwischen zwei radialen Abschnitten verläuft.

4. Einschlaganker nach einem der vorgenannten Ansprüche, **dadurch gekennzeichnet, dass** die Außenkontur der Unterlegscheibe kreis- oder ellipsenförmig ausgebildet ist.

5. Einschlaganker nach einem der vorgenannten Ansprüche, **dadurch gekennzeichnet, dass** die Unterlegscheibe (3) eine Dicke von ≤0,8 mm, bevorzugt ≤ 0,7 mm aufweist.

6. Einschlaganker nach einem der vorgenannten Ansprüche, **dadurch gekennzeichnet, dass** der äußere Rand des äußeren radialen Abschnitts (33) zumindest bereichsweise mit einem Farbreservoir versehen ist, das durch das sprunghafte Umschlagen dieses äußeren radialen Abschnitts (33) zerstörbar ist.

7. Einschlaganker nach einem der vorgenannten Ansprüche, **dadurch gekennzeichnet, dass** an dem Schaft (11) ein zumindest bereichsweise umlaufender Steg angeordnet ist, wobei die Unterlegscheibe (3) zwischen diesem Steg und dem Nagelkopf (13) angeordnet ist.

8. Einschlaganker nach Anspruch 7, **dadurch gekennzeichnet, dass** der Steg durch einen in einer in dem Schaft (11) vorhandenen Nut eingebrachten Haltering gebildet ist.

## Claims

1. Bolt anchored by impact, comprising a shaft (11) and an outwardly expanding straddling cone (12) arranged at the end, and an expandable straddling bush (2) arranged on the straddling cone (12) for anchoring the impact bolt (1) in hard solid construction materials, in particular in concrete masonry, and a nail head (13) arranged at the end opposite the straddling cone (12) adjoining the shaft, where a washer (3) is arranged in front of the nail head (13), which in the unloaded state, is, at least in parts, mechanically pre-stressed, thereby placing it in a metastable state, **characterised in that** an indicating element for visual verification of the anchored joint is formed by a radial section (33) of the washer, where an outer radial section (33) is pre-stressed with reference to an inner radial section (31) which extends axially at a steep slope out of the outer radial section (33) in the form of a funnel.

2. Bolt anchored by impact in accordance with claim 1, **characterised in that**, between the outer radial section (33) and the inner radial section (31) an undulating intermediate section (34) is arranged which has a cross-section in the shape of a horizontal "S" and which initially runs contrary to the slope of the inner radial section (31) and then, after a turning point, passes over into the slope of the outer radial section (33).

3. Bolt anchored by impact in accordance with any of the preceding claims, **characterised in that** at least one arc-shaped, or preferably ring-shaped groove is made on one side of the washer (3), which runs between two radial sections.

4. Bolt anchored by impact in accordance with any of the preceding claims, **characterised in that** the outer contour of the washer is circular or elliptical in shape.

5. Bolt anchored by impact in accordance with any of the preceding claims, **characterised in that** the washer (3) has a thickness of ≤ 0,8 mm, or preferably ≤ 0,7 mm.

6. Bolt anchored by impact in accordance with any of the preceding claims, **characterised in that** the outer edge of the outer radial section (33) is provided, at least in part, with a reservoir of dye which is destroyed when the outer radial section (33) is suddenly folded over.

7. Bolt anchored by impact in accordance with any of the preceding claims, **characterised in that** a ridge is arranged on the shaft (11) running, at least partially, around its circumference, where the washer (3) is arranged between this ridge and the nail head (13).

8. Bolt anchored by impact in accordance with claim no. 7, **characterised in that** the ridge is formed by a retaining ring mounted in a groove in the shaft (11).

## Revendications

1. Cheville à frapper, comprenant une tige (11) et un cône d'expansion (12) disposé à une extrémité et allant en s'élargissant vers l'extérieur, ainsi qu'une douille expansible (2) qui s'ouvre lors de son enfoncement sur le cône d'expansion (12) pour ancrer la cheville à frapper (1) dans des matériaux de construction massifs durs, en particulier dans des maçonneries en béton, ainsi que comprenant une tête de clou (13) disposée en face du cône d'expansion (12) et située par une extrémité dans le prolongement de la tige, sachant qu'une rondelle (3) est disposée devant la tête de clou (13), rondelle qui à l'état hors charge se trouve mécaniquement sous précontrainte au moins localement, faisant qu'elle présente un état métastable, **caractérisée en ce qu'**un élément d'affichage permettant de contrôler visuellement la liaison de cheville est formé par un segment radial de la rondelle, sachant qu'un segment (33) extérieur radial est précontraint par rapport à un segment (31) intérieur radial qui s'étend axialement en forme d'entonnoir avec une plus grande pente hors du segment (33) extérieur radial.

2. Cheville à frapper selon la revendication 1, **caractérisée en ce qu'**entre le segment (33) extérieur radial et le segment (31) intérieur radial est disposé un segment intermédiaire (34) ondulé présentant une section en forme de « S couché » et dont le tracé est dans un premier temps contraire à la pente du segment annulaire (31) intérieur, puis qui via un tournant acquiert la pente du segment annulaire (33) extérieur.

3. Cheville à frapper selon l'une des revendications précédentes, **caractérisée en ce que** sur un côté de la rondelle (3) a été ménagé un sillon arqué, de préférence annulaire, qui circule entre deux segments radiaux.

4. Cheville à frapper selon l'une des revendications précédentes, **caractérisée en ce que** le contour extérieur de la rondelle est configuré en forme de cercle ou d'ellipse.

5. Cheville à frapper selon l'une des revendications précédentes, **caractérisée en ce que** la rondelle (3) présente une épaisseur de ≤ 0,8 mm, de préférence de ≤ 0,7 mm.

6. Cheville à frapper selon l'une des revendications précédentes, **caractérisée en ce que** le bord extérieur du segment (33) extérieur radial est muni au moins localement d'un réservoir d'encre pouvant être détruit par le rabattement brutal de ce segment (33) extérieur radial.

7. Cheville à frapper selon l'une des revendications précédentes, **caractérisée en ce que** contre la tige (11) est agencée une nervure, au moins localement, périphérique, sachant que la rondelle (3) est disposée entre cette nervure et la tête de clou (13).

8. Cheville à frapper selon la revendication 7, **caractérisée en ce que** la nervure est formée par une bague de retenue introduite dans une rainure présente dans la tige (11).
